# EUROPEAN PATENT SPECIFICATION

(11) **EP 1 821 014 B1**
(45) Date of publication and mention of the grant of the patent: **08.05.2013**
(21) Application number: 05804041.1
(22) Date of filing: 10.11.2005
(51) Int. Cl.: F16K 17/04, F15B 11/00, F16K 47/02

(54) **RELIEF VALVE**
ENTLÜFTUNGSVENTIL
SOUPAPE DE DECHARGE

(30) Priority: 25.11.2004 JP 2004340466
(43) Date of publication of application: 22.08.2007
(73) Proprietor: KAYABA INDUSTRY CO., LTD., Minato-Ku, Tokyo 105-6190 (JP)
(72) Inventor: AKUTAGAWA, Takafumi, KAYABA INDUSTRY CO., LTD, Minato-ku, Tokyo 1056190 (JP); KUBOI, Hiroaki, KAYABA INDUSTRY CO., LTD., Minato-ku, Tokyo 1056190 (JP); SUZUKI, Kenji, KAYABA INDUSTRY CO., LTD., Minato-ku, Tokyo 1056190 (JP)
(74) Representative: Grünecker, Kinkeldey, Stockmair & Schwanhäusser
(86) International application number: PCT/JP2005/021072
(87) International publication number: WO 2006/057189

(56) References cited:
- EP-A2- 0 964 194
- DE-A1- 10 063 153
- DE-A1- 10 063 153
- JP-A- 5 302 682
- JP-A- 7 063 277
- JP-A- 8 312 818
- JP-A- 55 040 322
- JP-A- 2003 214 549
- JP-U- 2 047 482
- JP-U- 2 066 780
- JP-U- 54 109 130
- JP-U- 60 014 388
- JP-Y1- 44 012 548
- US-A- 4 463 929

## Description

### FIELD OF THE INVENTION

The present invention relates to a relief valve interveningly provided to a hydraulic circuit of a hydraulic machinery.

### BACKGROUND OF THE INVENTION

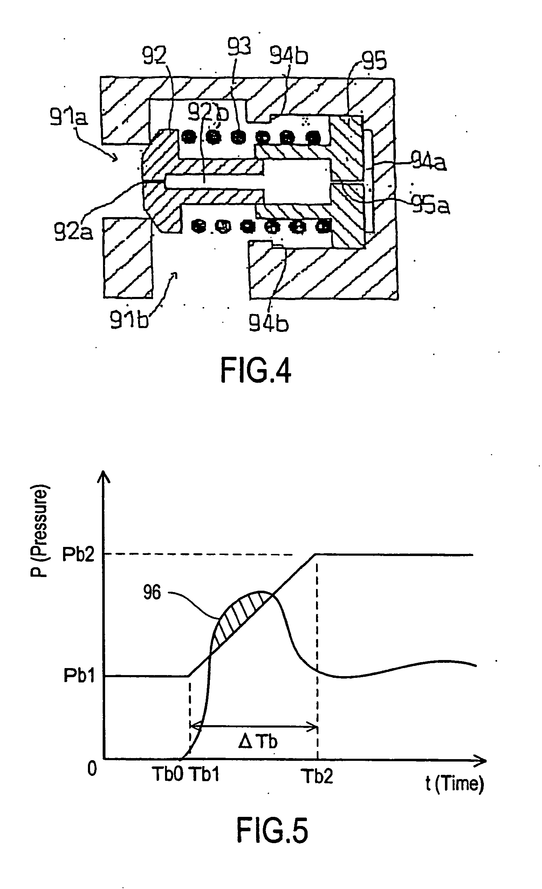

JP2000-145703 discloses a relief valve constructed such that an operational shock generated when starting/ stopping a hydraulic machinery may be softened. The one example thereof is described in Fig. 4, and in the figure, 91a is a high-pressure port which is connected to a hydraulic circuit, 91b is a low-pressure port which is connected to a drain circuit, and 92 is a valve supported so as to be movable in back and forward in the axial direction thereof to open and close between these ports 91a, 91b. A piston 95 is supported at downstream side of the valve 92 so as to be movable coaxially with the valve 92.

A spring 93 is interveningly provided between the valve 92 and the piston 95, and a damping chamber 94a is defined at back side of the piston 95. The valve 92 and the piston 95 are provided with pressure guiding paths 92a, 92b, 95a for guiding a pressure in the upstream side of the valve 92 (working pressure of the hydraulic circuit) to the damping chamber 94. An orifice to restrict the pressure guiding path is installed to the pressure guiding paths 92a, 95a. 94b is a stopper (stepped part) to inhibit further expansion of the damping chamber 94a.

Provided with such construction, a hydrostatic pressure property as shown in Fig. 5 may be obtained when the hydraulic machinery is started. As the pressure of the hydraulic circuit is build up to or exceed the prescribed pressure Pb1, the piston 95 moves to a compressing direction of the spring 93 by the pressure of the damping chamber 94a. Therefore, the set pressure of the valve 92 increases from time Tb 1 with the expansion of the damping chamber 94 and is maintained at Pb2 after the piston 95 is contacted to the stopper 94b (after time Tb2).

The orifice is provided to the pressure guiding paths 92a, 95a connecting the high-pressure port 91a and the damping chamber 94a, thereby, the increase of the pressure in the upstream side of the valve 92 is transmitted to the damping chamber 94a with delay when there is a sudden built up of the pressure of the hydraulic circuit. Accordingly, the set pressure of the valve 92 increases gradually. Therefore, when the pressure in the upstream side of the valve 92 becomes equal to or more than the set pressure Pb1 to Pb2, in order to release the excessive pressure in upstream side to the drain side, the valve 92 moves to the compressing direction of the spring 93 to open the valve (shaded area in the figure). Thereby, a sudden build up of the pressure of the hydraulic circuit is absorbed during the duration from time Tb 1 to time Tb2 (time ΔTb), and the operational shock caused when the hydraulic machinery is started can be inhibited. In addition, Tb0 is the time that the hydraulic machinery is started.

### SUMMARY OF THE INVENTION

In such a conventional relief valve, it becomes possible to adjust the settings of Pb 1 and Pb2 by replacing the spring 93 to change the biasing force of the piston 95. In Fig. 5, as to the hydraulic circuit with which the stationary pressure range of the pressure curve 96 is set higher than the range of the set pressure Pb1 to Pb2, the biasing force of the piston 95 is set to large, on the other hand, as to the hydraulic circuit with which the stationary pressure range of the hydraulic pressure curve 96 is set lower than the range of Pb 1 to Pb2, the biasing force of the piston 95 is set to small. According to this, even though the settings of Pb 1, Pb2 may be changed, the angle of slope (gradient of the change) of Pb1 to Pb2 is not made to be adjustable. Therefore, it is difficult to match the hydrostatic pressure property of the relief valve to various hydraulic pressure curves and there may a case where the sufficient softening of the operational shock may not be ensured. Further, a replacement of the spring 93 is required to change the settings of Pb 1 and Pb2 which may incur substantial increase in cost.

Other examples of relief valves comprising damping orifices have been described in documents : DE 10063153, EP 0964194, US 4463929 or JP 55040322.

The present invention has been designed in consideration of the above mentioned problems, and it is an object thereof to provide the relief valve capable of adjusting the properties of the set pressure.

The present invention provides a relief valve as that claimed in claim 1.

According to the present invention, once the pressure in the upstream side of the valve has become equal to or more than prescribed pressure, the damping chamber is expanded as the hydraulic pressure in the upstream side of the valve is guided to a damping chamber through a pressure guiding path, and the piston is moved to a compressing direction of the spring. Thereby, the relief set pressure with which the valve is opened is changed linearly in response to the shifting distance of the piston (the amount of contraction of the spring).

Further, since the orifice is provided to the pressure guiding path, when there is a sudden built up of the pressure in the upstream side of the valve, the increase of the pressure in the upstream side of the valve is transmitted to the damping chamber with delay. Thereby, the relief set pressure of the valve increases gradually, and so once the pressure in the upstream side of the valve becomes equal to or more than the relief set pressure of the valve, the valve is opened with compressing the spring to allow the excessive pressure of the hydraulic circuit to be relieved to the drain circuit. As described above, even at a process that the set pressure changes in response to the expansion of the damping chamber, the excessive pressure of the hydraulic circuit exceeding the relief set pressure is relieved to the drain circuit, thereby the operational shock at the starting and stopping of the hydraulic machinery can be moderated.

Further, the plurality of orifices are exchangeably arranged to the pressure guiding path in series, therefore it is possible to easily adjust the changing characteristics of the relief set pressure of the valve. For example, a rate of changing of the relief set pressure can be changed to those with more gradual change by adding the orifice having a smaller diameter than the those in existing condition, which control the flowing rate of the pressure guiding path.

### BRIEF DESCRIPTION OF THE DRAWINGS

Fig. 1A is a sectional diagram showing a relief valve according to the embodiment of the present invention.
Fig. 1B is a left side view showing a relief valve according to the embodiment of the present invention.
Fig. 2 is, similarly, a hydrostatic pressure property diagram of a relief valve.
Fig. 3 is, similarly, a circuit block diagram for illustrating a relief valve.
Fig. 4 is a schematic diagram illustrating a conventional relief valve.
Fig. 5 is, similarly, a hydrostatic pressure property diagram of a relief valve.

### DESCRIPTION OF THE PREFERRED EMBODIMENTS

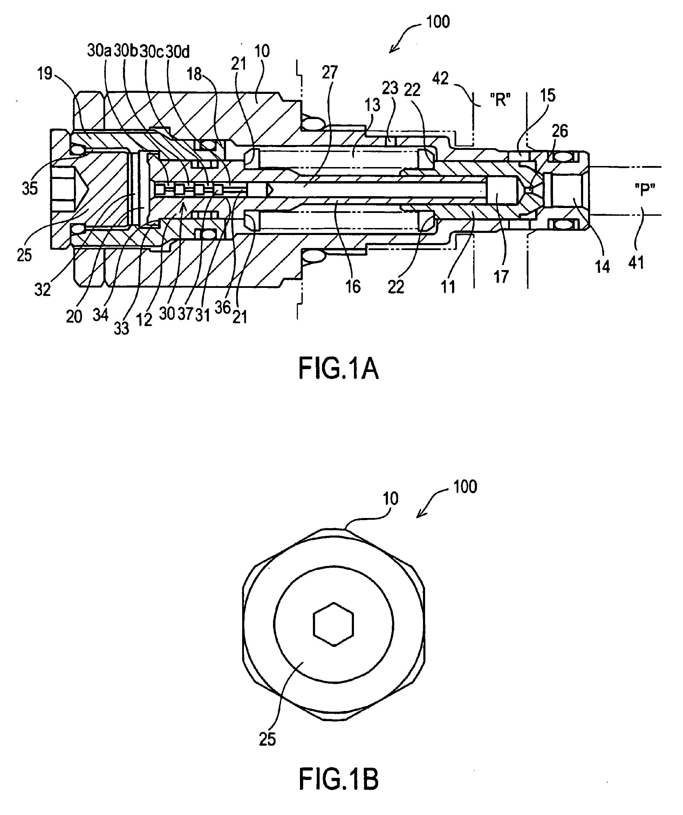

A relief valve 100 according to the embodiment of the present invention is described hereinafter with reference to the drawings. Fig. 1A is a sectional diagram of the relief valve 100 and Fig. 1B is a left side view of the relief valve 100.

The relief valve 100 is that provided interveningly to a hydraulic circuit of a hydraulic machinery, and has a function of reliefing a pressure of a hydraulic circuit 41 to a drain circuit 42 when a pressure of the hydraulic circuit 41 has become equal to or more than the relief set pressure of the relief valve 100.

The relief valve 100 is comprised of a casing 10 comprising a high-pressure port 14 communicating to the hydraulic circuit 41 and a low-pressure port 15 communicating to the drain circuit 42. Within the casing 10, a valve 11 for opening and closing between the high-pressure port 14 and the low-pressure port 15, a piston 12 supported so as to be movable in the coaxial direction with the valve 11, a spring 13 interveningly provided between the valve 11 and the piston 12 for biasing the valve 11 to a valve closing direction against the pressure of the high-pressure port 14, and a cylinder 19 for supporting the piston 12 so as to be slidably movable in the axial direction are provided.

The valve 11 is fit together to the inner periphery of the casing 10 so as to be movable in back and forward in the axial direction. The valve 11 receives hydraulic pressure from the side of the high-pressure port 14 and at the same time is biased by the spring 13 from the back side. Accordingly, the valve 11 maintains valve closed state while the hydraulic pressure of the high-pressure port 14 is less than the biasing force of the spring 13. Further, when the hydraulic pressure of the high-pressure port 14 becomes greater than the biasing force of the spring 13, the spring 13 is compressed to open the valve to relief the pressure of the high-pressure port 14 to the low-pressure port 15. Accordingly, the relief set pressure of the relief valve 100 is determined by the biasing force of the spring 13. In addition, the valve 11 has a guide hall 17 formed to open to the back side and extend to the axial direction.

The piston 12 has a rod part 16 supported so as to be slidably movable by the guide hall 17 of the valve 11, and is supported so as to be movable in the coaxial direction in relation to the valve 11. In addition, a stopper 33 in step form is formed to the back end part of the piston 12.

The cylinder 19 is integrally formed with a shaft bearing 18 for supporting the piston 12. A latching part 34 against which the stopper 33 of the piston 12 is contacted is formed to the cylinder 19. Therefore, the piston 12 can move to a direction that compresses the spring 13 until the stopper 33 is in contact against the latching part 34. In addition, an opening part 35 is formed to the back side of the cylinder 19.

A damping chamber 20 is defined at the back side of the piston 12. The damping chamber 20 is constructed by a back side 12a of the piston 12, an inner periphery of the cylinder 19, and a releasable plug 25 screwed into an opening part 35 of the cylinder 19 to seal the cylinder 19. Oil flows into the damping chamber 20 and the position of the piston 12 is decided by the volume of the damping chamber 20.

The spring 13 is compressingly provided between a spring bearing 21 formed in step form at a base end side of a rod part 16 of the piston 12 and a spring bearing 22 formed in step form at the valve 11. The amount of contraction of the spring 13 is decided by the position of the piston 12. In other words, as the piston 12 moves to a direction to compress the spring 13, the biasing force by the spring 13 becomes greater and so the set pressure of the relief valve 100 also becomes greater.

Pressure guiding paths 26, 27 for guiding the pressure in the upstream side of the valve 11 to the damping chamber 20 are formed to the valve 11 and the piston 12. The pressure guiding path 26 provided to the valve 11 is formed so as to communicate the high-pressure port 14 and the guide hall 17. The pressure guiding path 27 provided to the piston 12 is formed so as to communicate the guide hall 17 and the damping chamber 20. Thus, the high-pressure port 14 and the damping chamber 20 are in communication by the pressure guiding path 26 and the pressure guiding path 27. Therefore, oil in the hydraulic circuit 41 flows into the damping chamber 20 from the high-pressure port 14 through the pressure guiding path 26 and the pressure guiding path 27. Thereby, the set pressure of the relief valve 100 is changed by the change of the amount of contraction of the spring 13 which is caused by the change in the position of the piston 12, which is again caused by the change of the volume of the damping chamber 20.

Female screw is formed to the damping chamber 20 side of the inner periphery of the pressure guiding path 27. In this way, a part of the pressure guiding path 27 is formed into threaded hole 31.

A plurality of orifices 30 (30a, 30b, 30c, 30d) are exchangeably arranged in the pressure guiding path 27 in series, for controlling the flowing rate of the oil passing through the pressure guiding path 27. The plurality of orifices 30 have flow channels 36 at the axial center and male screw which screws into the threaded hole 31 is formed at the outer periphery. Each of the plurality of orifices 30a, 30b, 30c, 30d has a flow channel 36 of different diameter.

The plurality of orifices 30 are arranged by being screwed into the threaded hole 31 in series, and in ascending order of the diameter of the flow channel 36 from the damping chamber 20 side. A engaging hole 37 is formed to the plurality of orifices 30 for engaging a tool (not illustrated) for take in and out the orifices 30 from and to the threaded hole 31. Therefore, the orifices 30 can be moved along the female screw inside the threaded hole 31 by engaging the tool to the engaging hole 37 and rotating it. Thereby, it is made to possible to freely exchange the orifices 30 to be arranged inside the threaded hole 31.

Next, a description is given as to a movement and the set pressure of the relief valve 100.

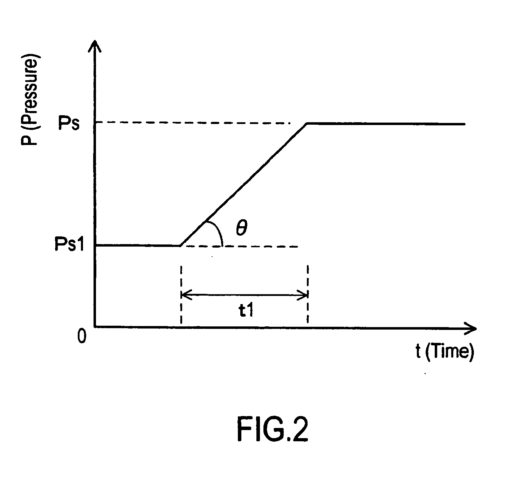

Once the pressure in the upstream side of the valve 11 has become equal to or more than the prescribed pressure, the damping chamber 20 is expanded as the hydraulic pressure in the upstream side of the valve 11 is guided to the damping chamber 20 through the orifices 30 in the pressure guiding path 27, and the piston 12 is moved to the compressing direction of the spring 13. Thereby, the relief set pressure with which the valve 11 opens is changed linearly in response to the shifting distance of the piston 12 (the amount of contraction of the spring 13). In the case illustrated in Fig. 2, the set pressure is changed from Ps 1 to Ps.

Ps 1 that is an initial relief set pressure is decided by the initial position of the piston 12. Further, Ps that is the maximum value of the relief set pressure is decided by the amount of contraction of the spring 13, in other words, the shifting distance of the piston 12 until the stopper 33 of the piston 12 is contacted against the latching part 34 of the cylinder 19. Thus, the maximum value Ps of the relief set pressure depends on the location of the stopper 33 of the piston 12.

The orifices 30 are arranged in the pressure guiding path 27, thereby, the increase in the pressure of the high-pressure port 14 is transmitted to the damping chamber 20 with delay when the pressure of the hydraulic circuit is built up suddenly. Therefore, the set pressure of the relief valve 100 is increased gradually. Accordingly, once the pressure of the high-pressure port 14 suddenly becomes equal to or more than the set pressure range of Ps 1 to Ps, the valve 11 is opened to relief the excessive pressure in the upstream side to the drain side. Thereby, during time T1, the sudden build up of the pressure of the hydraulic circuit 41 is absorbed, and an occurrence of the operational shock at the starting of the hydraulic machinery can be moderated.

The flowing rate of the pressure guiding path 27 is controlled by the orifices 30. The plurality of orifices 30a to 30d are arranged exchangeably in the threaded hole 31 of the pressure guiding path 27, thereby it becomes possible to control the flowing rate of the pressure guiding path 27 by changing the effective diameter of the flow channel 36 of the orifices 30. Thereby, the flowing rate of the oil flowing into the damping chamber 20 can be controlled and the moving speed of the piston 12 can be controlled, and so the rate of compression of the spring 13 can be controlled. Accordingly, it becomes possible to easily adjust the rate of change of the relief set pressure from Ps1 to Ps, i.e. the gradient θ and time t1 in Fig. 2 by changing the effective diameter of the flow channels 36 of the orifices 30.

Since the plurality of orifices 30a to 30d are arranged in series and in ascending order of the diameters of the flow channels 36 in the threaded hole 31 from the damping chamber 20 side, the effective diameter of the flow channel 36 of the orifice 30, by which the flowing rate in the pressure guiding path 27 is controlled can be changed by one scale greater by, for example, removing the plug 25 and the most front orifice 30a in the threaded hole 31 by using the tool. Thereby, the gradient θ of the relief set pressure Ps 1 to Ps can be adjusted to slightly steeper one. Further, the gradient θ of the relief set pressure Ps 1 to Ps can be adjusted to more gentle one, conversely, by adding to the threaded hole, the orifice having the flow channel 36 of a smaller diameter than that of the orifice 30a which is in use in the existing condition, which controls the flowing rate of the pressure guiding path 27.

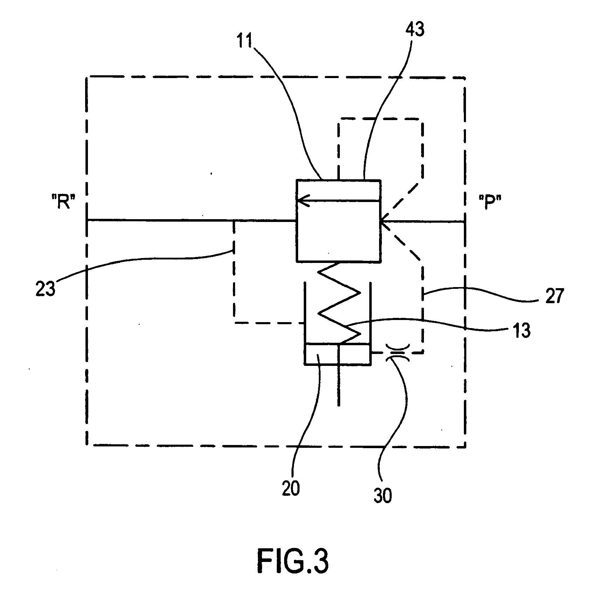

Herein, the circuit construction of the relief valve 100 is illustrated in Fig. 3. 11 is the valve for opening and closing the communication between the hydraulic circuit and the drain circuit of the hydraulic machinery, 20 is the damping chamber which is expands and contracts in response to the movement of the piston 12, 13 is the spring interveningly provided between the valve 11 and the piston 12, 43 is a pressure receiving surface where the pressure of the hydraulic circuit is affected to the valve 11, 27 is the pressure guiding path for guiding the pressure of the hydraulic circuit (pressure in the upstream side of the valve 11) to the damping chamber 20, 30 is the orifice interveningly provided in the pressure guiding path 27, and 23 is a depressurizing path for opening the installing space of the spring 13 within the casing 10 to the drain circuit.

According to the above mentioned present embodiment, the plurality of orifices 30a to 30d having different flow channel diameters are exchangeably arranged in the pressure guiding path 27 in series, thereby the rate of changing of the relief set pressure which changes in response to the expansion and contraction of the damping chamber 20 can be easily adjusted.

In the present embodiment, apart from the above described construction, it is also effective to exchangeably provide a shim 32 in the damping chamber 20 to define the initial load of the spring 13 as shown in Fig. 1. The shim 32 is pushed into the inner periphery of the cylinder 19, and installed at the adjacent position to the plug 25 of the damping chamber 20. The volume of the damping chamber 20 is changed by exchanging the shim 32 with the one having different thickness, thereby the initial position of the piston 12 is changed to the axial direction. Thereby, the initial load of the spring 13 is changed, and so it becomes possible to adjust the initial relief set pressure Ps1.

Exchange of the shim 32 is accomplished by removing the shim 32 from the opening part 35 of the cylinder 19 by pushing the valve 11 from the high-pressure port 14 side to the direction of the damping chamber 20 after removing the plug 25, and then, pushing the shim 32 having the thickness corresponding to the new initial relief set pressure Ps 1 into the cylinder 19 from the opening part 35. It is useful to set the volume of the damping chamber 20 such that it has a prescribed depth capable to push the shim 32 having the maximum thickness into the inner periphery of the cylinder 19.

As described above, an adjustment of the effective diameter of the flow channel 36 in the orifices 30 and an adjustment of the thickness of the shim 32 are used in combination, thereby, the rate of changing θ of the relief set pressure and the initial relief set pressure Ps 1 can be freely set, therefore it becomes easy to match the hydrostatic pressure property of the relief valve to various hydraulic pressure curve, and so sufficient softening of the operational shock can be ensured.

## Claims

1. A relief valve (100) for being interveningly provided to a hydraulic circuit (41) of a hydraulic machinery comprising:
a high-pressure port (14) for communicating to the hydraulic circuit (41);
a low-pressure port (15) for communicating to drain circuit (42);
a valve (11) supported so as to be movable in back and forward in the axial direction thereof to open and close between these ports;
a piston (12) slidably and movably inserted in the valve, and supported so as to be movable in the coaxial direction;
a spring (13) interveningly provided between the valve (11) and the piston (12) for biasing the valve to a valve closing direction against the pressure of the high-pressure port (14);
a damping chamber (20) defined at back side of the piston (12) and an opening part thereof is sealed so as to be capable of being opened and closed by a plug (25);
a pressure guiding path (26, 27) for communicating the high-pressure port (14) and the damping chamber (20) by penetrating through the valve (11) and the piston (12), and guiding the pressure in the upstream side of the valve to the damping chamber, and
a plurality of orifices (30a-30d) having different flow channel diameters exchangeably arranged in series in the pressure guiding path (26, 27), wherein
a pressure guiding path (27) of the piston (12) is made of a threaded hole and the plurality of orifices (30a-30d) are screwed into the threaded hole in series and in ascending order of the flow channel diameter from the damping chamber side.

2. The relief valve according to claim 1 wherein, a shim (32) for setting an initial load of the spring (13) is provided exchangeably in the damping chamber (20).

3. The relief valve according to claim 2 wherein, the damping chamber (20) is comprised of a back side of the piston (12), a cylinder (19) for supporting the piston slidably movably in the axial direction, and a plug (25) for sealing an opening part formed to the cylinder and wherein,
the shim (32) is pushed into an inner periphery of the cylinder (19) from the opening part of the cylinder.

## Patentansprüche

1. Entlüftungsventil (100), das in einem Hydraulikkreis (41) einer Hydraulikmaschine angeordnet werden kann, umfassend:
einen Hochdruckanschluss (14), der mit dem Hydraulikkreis (41) in Verbindung steht;
einen Niederdruckanschluss (15), der mit einem Ablasskreis (42) in Verbindung steht;
ein Ventil (11), das derart gehalten ist, dass es in seiner axialen Richtung zurück und vorwärts bewegt werden kann, um sich zwischen diesen Anschlüssen zu öffnen und zu schließen;
einen Kolben (12), der gleitfähig und beweglich in das Ventil eingefügt und derart gehalten ist, dass er in der koaxialen Richtung beweglich ist;
eine Feder (13), die zwischen dem Ventil (11) und dem Kolben (12) vorgesehen ist, um das Ventil in eine Ventilschließrichtung gegen den Druck des Hochdruckanschlusses (14) vorzuspannen;
eine Dämpfungskammer (20), die auf der Rückseite des Kolbens (12) gebildet ist, wobei ein Offnungsteil derselben verschlossen ist, um so durch einen Pfropfen (25) geöffnet und verschlossen werden zu können;
einen Druckleitungsweg (26, 27), der den Hochdruckanschluss (14) und die Dämpfungskammer (20) verbindet, indem er durch das Ventil (11) und den Kolben (12) verläuft, und den Druck auf der stromaufwärtigen Seite des Ventils zu der Dämpfungskammer leitet; und
zahlreiche Düsen (30a-30d), die unterschiedliche Strömungskanaldurchmesser haben, die austauschbar in Reihe in dem Druckleitungsweg (26, 27) angeordnet sind, wobei
ein Druckleitungsweg (27) des Kolbens (12) aus einem Gewindeloch besteht und die zahlreichen Düsen (30a-30d) in Reihe und in ansteigender Reihenfolge des Strömungskanaldurchmessers von der Dämpfungskammerseite in das Gewindeloch geschraubt sind.

2. Entlüftungsventil nach Anspruch 1, bei dem eine Ausgleichsscheibe (32) zum Einstellen einer Ausgangskraft der Feder (13) austauschbar in der Dämpfungskammer (20) vorgesehen ist.

3. Entlüftungsventil nach Anspruch 2, bei dem die Dämpfungskammer (20) aus einer Rückseite des Kolbens (12), einem Zylinder (19), der den Kolben gleitfähig beweglich in der Achsrichtung hält, und einem Pfropfen (25) zum Verschließen eines Offnungsteils besteht, der an dem Zylinder ausgebildet ist, und
die Ausgleichsscheibe (32) in einen Innenumfang des Zylinders (19) von dem Öffnungsteil des Zylinders geschoben ist.

## Revendications

1. Soupape de décharge (100) prévue pour intervenir sur un circuit hydraulique (41) d'une machinerie hydraulique, comprenant :
un orifice haute pression (14) pour la communication avec le circuit hydraulique (41) ;
un orifice basse pression (15) pour la communication avec un circuit de drainage (42) ;
une soupape (11) soutenue de façon à être mobile en avant et arrière dans la direction axiale pour s'ouvrir et se fermer entre ces orifices ;
un piston (12) inséré de manière coulissante et mobile dans la soupape et soutenu de façon à être mobile dans la direction coaxiale ;
un ressort (13) prévu pour intervenir entre la soupape (11) et le piston (12) pour l'inclinaison de la soupape vers une direction de fermeture de soupape contre la pression de l'orifice haute pression (14) ;
une chambre d'amortissement (20) définie sur le côté arrière du piston (12), une partie d'ouverture de celle-ci étant rendue étanche de façon à être capable d'être ouverte et fermée par un bouchon (25) ;
un chemin de guidage de pression (26, 27) pour mettre en communication l'orifice haute pression (14) et la chambre d'amortissement (20) par pénétration dans la soupape (11) et le piston (12), et pour le guidage de la pression dans le côté amont de la soupape jusqu'à la chambre d'amortissement ; et
une pluralité d'ouvertures (30a-30d) présentant différents diamètres de canaux d'écoulement disposés de manière interchangeable en série dans le chemin de guidage de pression (26, 27), dans laquelle
un chemin de guidage de pression (27) du piston (12) est composé d'un trou fileté et la pluralité d'orifices (30a, 30d) est vissée dans le trou fileté en série et en ordre croissant du diamètre de canaux d'écoulement depuis le côté de la chambre d'amortissement.

2. Soupape de décharge selon la revendication 1, dans laquelle une rondelle de calage (32) pour le réglage d'une charge initiale du ressort (13) est prévue de manière interchangeable dans la chambre d'amortissement (20).

3. Soupape de décharge selon la revendication 2, dans laquelle la chambre d'amortissement (20) est composée d'un côté arrière du piston (12), d'un cylindre (19) pour le support du piston de manière coulissante et mobile dans la direction axiale, et d'un bouchon (25) pour l'étanchéité d'une partie d'ouverture formée sur le cylindre et dans laquelle,
la rondelle de calage (32) est poussée dans une périphérie intérieure du cylindre (19) depuis la partie d'ouverture du cylindre.
